# FASCICULE DE BREVET EUROPEEN

(11) **EP 2 030 818 B1**
(45) Date de publication et mention de la délivrance du brevet: **10.03.2010**
(21) Numéro de dépôt: 08162962.8
(22) Date de dépôt: 26.08.2008
(51) Int. Cl.: B60H 1/00

(54) **Dispositif de distribution d'un flux d'air mixé, notamment pour une installation de chauffage, de ventilation et/ou de climatisation d'un véhicule automobile**
Kraftfahrzeugklimaanlagemischluftstromverteilvorrichtung
Mixed air flow directing device, in particular for a heating, ventilating and/or air conditioning system of a vehicle

(30) Priorité: 29.08.2007 FR 0706065
(43) Date de publication de la demande: 04.03.2009
(73) Titulaire: VALEO SYSTEMES THERMIQUES, 78321 Le Mesnil St Denis Cedex (FR)
(72) Inventeur: Lebecq, Olivier, 78390 Bois d'Arcy (FR); Queinnec, Jean-Yves, 78990 Elancourt (FR)
(74) Mandataire: Léveillé, Christophe

(56) Documents cités:
- EP-A- 1 095 802
- WO-A-2006/037567
- DE-A1- 10 127 347
- DE-A1- 10 161 997

## Description

### Domaine technique de l'invention.

La présente invention est du domaine des installations de chauffage, de ventilation et/ou de climatisation, notamment d'un véhicule automobile. Elle a pour objet un volet de distribution intégré dans une telle installation, un dispositif de génération d'un flux d'air mixé équipé d'un tel volet de distribution ainsi qu'une installation logeant un tel dispositif.

### Etat de la technique.

Un dispositif de mixage comprenant un volet est connu du document DE 101 61 997, qui est considéré comme l'art antérieur le plus proche.

Un véhicule automobile est couramment équipé d'une installation de chauffage, de ventilation et/ou de climatisation qui est destinée à réguler la température de l'air contenu à l'intérieur de l'habitacle du véhicule. L'installation comprend un boîtier délimité par une cloison à travers laquelle sont ménagées des ouvertures, dont au moins une entrée d'air et au moins une sortie d'air. Le boîtier loge un pulseur ou groupe moto-ventilateur pour faire circuler un flux d'air depuis l'entrée d'air vers la sortie d'air et des moyens de traitement thermique du flux d'air pour réchauffer et/ou refroidir le flux d'air préalablement à sa distribution à l'intérieur de l'habitacle à travers la sortie d'air. Les moyens de traitement thermique du flux d'air comprennent un évaporateur qui est, notamment, destiné à refroidir le flux d'air qui le traverse et un radiateur, éventuellement associé à un radiateur additionnel, notamment électrique constitués d'une série de résistances électriques, qui est destiné à réchauffer le flux d'air qui le traverse.

Plus précisément, l'évaporateur est placé après l'entrée d'air du boîtier de sorte que la totalité du flux d'air entrant soit refroidi. Une fraction du flux d'air refroidi est réchauffée par le radiateur. Le boîtier comporte un dispositif apte à générer un flux d'air mixé à partir du flux d'air refroidi et du flux d'air réchauffé. Ce dispositif comprend une chambre de mixage d'un flux d'air froid issu du flux d'air refroidi et d'un flux d'air chaud issu du flux d'air réchauffé. La chambre de mixage est délimitée par une enveloppe constitutive du boîtier. Cette enveloppe est pourvue d'une bouche d'admission du flux d'air froid, d'une bouche d'admission du flux d'air chaud et d'au moins une bouche d'évacuation du flux d'air mixé. La chambre de mixage constitue une enceinte à l'intérieur de laquelle un volet de mixage est mobile entre une première position dans laquelle il obture la bouche d'admission du flux d'air froid, et une deuxième position dans laquelle il obture la bouche d'admission du flux d'air chaud à l'intérieur de la chambre de mixage. Lorsque le volet de mixage est placé en une position intermédiaire entre la première et la deuxième position, il autorise le passage simultané d'un flux d'air froid et d'un flux d'air chaud en proportions respectives variables pour générer un flux d'air mixé à l'intérieur de la chambre de mixage.

Un tel volet de mixage est par exemple du type 'tambour' mobile en rotation autour d'un axe. Dans ce cas, le volet de mixage comprend une paroi d'obturation conformée en une portion de cylindre constituant un organe d'obturation de la bouche d'admission du flux d'air froid et/ou de la bouche d'admission du flux d'air chaud. La paroi d'obturation est reliée à l'axe de rotation du volet de mixage par l'intermédiaire de flasques, en particulier conformés en une portion de disque circulaire.

Le boîtier est pourvu d'au moins une sortie d'air mixé équipée d'un volet de distribution. Ce volet de distribution est manoeuvrable entre une position d'ouverture dans laquelle il autorise une circulation d'air à travers la sortie d'air et une position de fermeture dans laquelle il interdit une telle circulation. Un canal de distribution d'air est en communication aéraulique avec la sortie d'air mixé pour acheminer le flux d'air mixé vers une zone spécifique de l'habitacle, telle qu'une zone avant et/ou une zone arrière, une zone droite et/ou une zone gauche, une zone de pied, voire une zone définie par une quelconque combinaison de ces critères. Le volet de distribution est indifféremment articulé sur le boîtier ou dans le canal de distribution. Pour connaître un environnement technologique de la présente invention, on pourra par exemple se reporter au document EP1288031 qui décrit une installation du genre susvisé.

Le volet de distribution est principalement constitué d'une paroi délimitée par un pourtour périphérique qui est d'une conformation semblable à celle de la sortie d'air mixé. En d'autres termes, la paroi est apte à s'inscrire à l'intérieur de l'ouverture formant la sortie d'air mixé pour obturer cette dernière. Pour ce faire, la paroi est mobile en rotation sur elle-même autour d'un élément d'articulation qu'il comporte, de telle sorte que le volet de distribution puisse être placé en une quelconque position comprise entre sa position d'ouverture et sa position de fermeture.

D'une manière générale, une telle installation s'avère volumineuse et les modalités de raccordement du canal de distribution d'air avec la sortie d'air mixé sont complexes et engendrent un accroissement de l'encombrement global de l'installation. Plus particulièrement, une telle sortie d'air mixé est fréquemment placée en une zone difficilement accessible de l'installation de sorte que le canal de distribution présente une conformation complexe, généralement source de pertes de charge pour le flux d'air mixé véhiculé par le canal de distribution. Par ailleurs, l'espace alloué à une telle sortie d'air peut être réduit. Il en découle que ce canal est susceptible de présenter une section d'autant plus réduite. Ceci n'est pas satisfaisant au regard du fonctionnement et du rendement de l'installation. Il en ressort finalement qu'un tel volet de distribution mérite d'être amélioré pour permettre une mise en communication aéraulique aisée et rapide du canal de distribution avec la sortie d'air mixé correspondante.

### Objet de l'invention.

Un premier but de la présente invention est de proposer un volet de distribution qui soit apte à équiper une installation de chauffage, de ventilation et/ou de climatisation d'un véhicule automobile en étant disposé en un quelconque endroit de cette dernière et notamment à proximité d'un élément structurel que celle-ci comporte.

Un deuxième but de la présente invention est de proposer un dispositif de génération d'un flux d'air mixé équipé d'un tel volet de distribution dont la compacité soit la plus importante possible.

Un troisième but de la présente invention est de proposer une installation de chauffage, de ventilation et/ou de climatisation permettant une diffusion d'un flux d'air efficace et pérenne d'une zone de l'habitacle du véhicule à partir d'un flux d'air mixé dont les pertes de charge sont réduites au maximum, ce flux d'air mixé étant véhiculé par un canal de distribution dont la conformation est simple, préférentiellement rectiligne.

Un quatrième but de la présente invention est de proposer une telle installation qui permette de surcroit d'aérer avec les meilleures performances thermiques possible une zone de l'habitacle requérant un flux d'air mixé relativement plus chaud ou plus froid que d'autres flux d'air sortant de l'installation..

Pour ce faire, la présente invention propose un dispositif de génération d'un flux d'air mixé comportant une chambre de mixage logeant un volet de mixage, et comprenant au moins un volet de distribution mobile en rotation autour d'un élément d'articulation. Le volet de mixage comporte un passage latéral permettant la rotation du volet de distribution.

La forme du volet est dépendante de la disposition de la zone d'une bouche d'évacuation et de sa localisation dans l'installation de chauffage, de ventilation et/ou de climatisation.

Selon une variante de la présente invention, le volet de mixage comporte une paroi d'obturation, un axe de rotation et au moins un flasque formant une liaison entre la paroi d'obturation et l'axe de rotation du volet de mixage.

Alternativement, le flasque est disposé à une distance D d'un bord extrême du volet de mixage ménageant le passage latéral entre le bord extrême et le flasque du volet de mixage.

Selon la présente invention, le volet de mixage et les volets de distribution évoluent dans la même zone de l'installation de chauffage, de ventilation et/ou de climatisation. Plus particulièrement, le volet de mixage ne comprend pas de flasques qui soient disposés aux extrémités du volet de mixage. Ainsi, l'espace disponible permet de loger le volet de distribution.

L'élément d'articulation du volet de distribution est préférentiellement orthogonal à l'axe de rotation du volet de mixage.

Néanmoins, selon diverses variantes de réalisation, l'élément d'articulation du volet de distribution est agencé en fonction de l'architecture de l'installation de chauffage, de ventilation et/ou de climatisation. Ainsi, l'axe de rotation du volet de mixage et l'élément d'articulation du volet de distribution peuvent donc être orthogonaux entre eux, parallèles entre eux ou alors agencés dans des directions différentes.

L'élément d'articulation du volet de distribution est articulé sur une enveloppe délimitant la chambre de mixage ou sur un canal de distribution du flux d'air mixé.

De façon préférentielle, le canal de distribution du flux d'air mixé est en relation aéraulique avec une bouche d'évacuation du flux d'air mixé ménagée à travers l'enveloppe.

Ces dispositions sont telles que le canal de distribution est apte à être exploité pour aérer une zone spécifique de l'habitacle du véhicule, telle qu'une zone d'aération avant, une zone de pied avant, une zone de pied arrière ou une zone arrière. La liaison aéraulique entre le canal de distribution et l'enveloppe est ménagée en une zone aisément accessible de telle sorte que le canal de distribution présente une conformation globale simple, préférentiellement rectiligne, et en tout état de cause exempte de variations de géométries brusques génératrices de pertes de charge pour le flux d'air mixé véhiculé par le canal de distribution.

La bouche d'évacuation du flux d'air mixé est susceptible d'être disposée à proximité d'une bouche d'admission d'un flux d'air chaud ménagée à travers l'enveloppe de telle sorte que le flux d'air mixé véhiculé par l'intermédiaire du canal de distribution puisse aérer une zone de l'habitacle du véhicule requérant une aération fréquemment plus chaude que d'autres zones, telle qu'une zone de pied arrière ou avant.

Alternativement, la bouche d'évacuation du flux d'air mixé est susceptible d'être disposée à proximité d'une bouche d'admission d'un flux d'air froid ménagée à travers l'enveloppe de telle sorte que le flux d'air mixé véhiculé par l'intermédiaire du canal de distribution puisse aérer une zone de l'habitacle du véhicule requérant une aération fréquemment plus froide que d'autres zones.

De préférence, le flasque est formé d'au moins deux bras de liaison entre l'axe de rotation et la paroi d'obturation du volet de mixage, qui, selon une variante de réalisation, délimitent conjointement avec la paroi d'obturation un évidement pour un passage du flux d'air mixé.

Selon la présente invention, un exemple particulier de réalisation du volet de distribution consiste en ce que le volet comporte une paroi comprenant un dégagement apte à constituer un passage pour l'axe de rotation du volet de mixage. En particulier, la paroi est délimitée par un pourtour périphérique comportant deux points d'inflexion délimitant le dégagement.

Le dégagement prévu dans la proi est délimité par une première courbe C1. Ce dégagement constitue un passage pour un obstacle placé sur la trajectoire du volet de distribution lors de la rotation sur lui-même. Il en ressort finalement qu'un tel volet de distribution est susceptible d'être installé en un quelconque endroit d'une installation de chauffage, de ventilation et/ou de climatisation, et notamment au plus près d'un élément structurel que comprend cette dernière. Il en découle que la compacité globale de l'installation est améliorée de façon conséquente. Par ailleurs, la présence d'un tel dégagement permet une économie de matière pour la réalisation du volet de distribution et lui confère une aisance de réalisation, par moulage notamment.

Ainsi, selon la présente invention, le volet de distribution et le volet de mixage sont aptes à être disposés à proximité l'un de l'autre, le dégagement du volet de distribution constituant un passage pour l'axe de rotation du volet de mixage. Il en ressort une meilleure compacité du dispositif de génération du flux d'air mixé qui procure de surcroît une fonction de distribution du flux d'air mixé. La combinaison des fonctions de mixage et de distribution telle que présentée dans la présente invention permet d'obtenir une installation la plus compacte possible.

Une installation de chauffage, de ventilation et/ou de climatisation selon l'invention est principalement reconnaissable en ce qu'elle loge un tel dispositif de génération d'un flux d'air mixé.

### Description des figures.

La présente invention sera mieux comprise, et des détails apparaîtront, à la lecture de la description qui va être faite de diverses formes de réalisation données à titre d'exemple et détaillées dans les figures des planches annexées, dans lesquelles :
La figure 1 représente schématiquement en perspective une installation de chauffage, de ventilation et/ou de climatisation selon la présente invention.
La figure 2 représente schématiquement en perspective l'installation illustrée sur la figure précédente dans laquelle un canal de distribution a été enlevé, un volet de distribution intégré à l'installation étant disposé en position d'ouverture.
La figure 3 représente schématiquement en perspective l'installation illustrée sur la figure précédente, le volet de distribution intégré à l'installation étant disposé en position de fermeture.
La figure 4 représente schématiquement en perspective l'installation représentée sur les figures 2 et 3 dans laquelle le volet de distribution a été enlevé.
Les figures 5 et 6 représentent schématiquement en perspective un dispositif de génération d'un flux d'air mixé participant de l'installation et équipé du volet de distribution respectivement illustré en position d'ouverture et de fermeture.
Les figures 7 à 10 représentent schématiquement en perspective un volet de mixage et des volets de distribution intégré au dispositif de génération d'un flux d'air mixé illustré sur les figures 5 et 6.

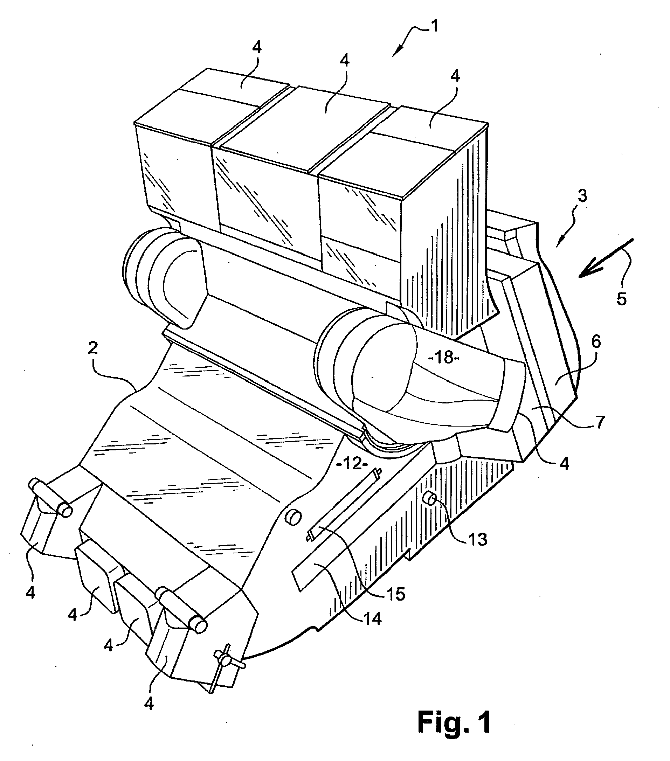

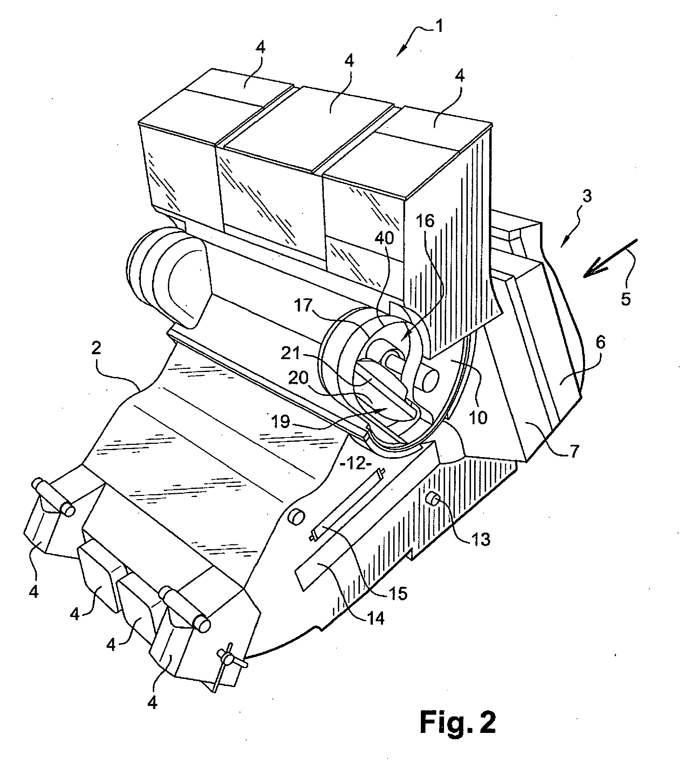

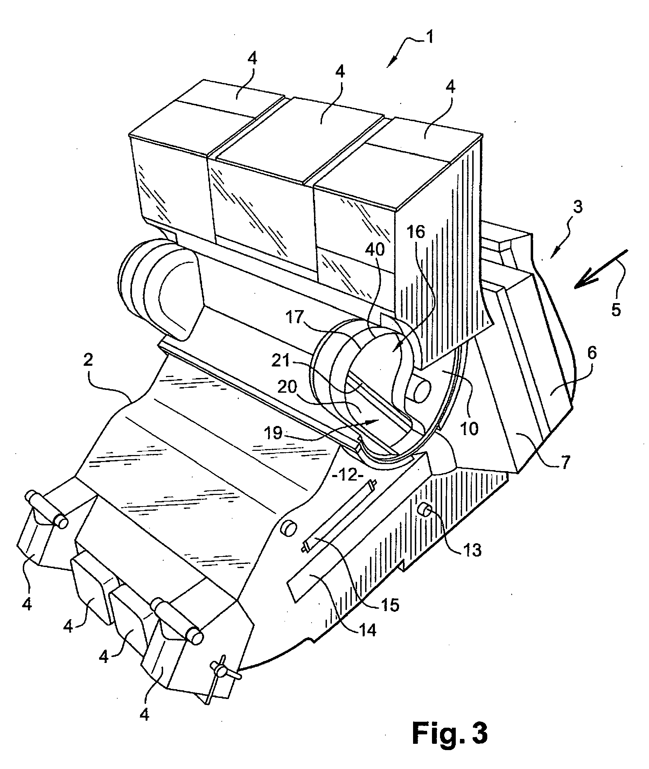

Sur les figures 1 à 3, une installation de chauffage, de ventilation et/ou de climatisation 1 est destinée à équiper un véhicule automobile pour réguler la température de l'air contenu dans l'habitacle du véhicule. L'installation 1 comporte un boîtier 2 pourvu d'une entrée d'air 3 et d'une pluralité de sorties d'air 4. Le boîtier 2 loge un pulseur, non représenté sur les figures, pour faire circuler un flux d'air 5 depuis l'entrée d'air 3 vers les sorties d'air 4. Le boîtier 2 loge également un filtre 6 pour retenir des particules portées par le flux d'air 5. En aval du filtre 6 selon le sens d'écoulement du flux d'air 5, le boîtier 2 loge un évaporateur 7 destiné à refroidir le flux d'air entrant en un flux d'air froid. Le flux d'air froid est réparti en une première fraction de flux d'air admise à l'intérieur d'une chambre de mixage 10, visible sur les figures 2 et 3, et en une deuxième fraction de flux d'air admise à l'intérieur d'une chambre de chauffage 12. Cette répartition est par exemple réalisée par l'intermédiaire d'un organe de répartition d'air 13, notamment du type volet papillon dont seul l'axe est visible sur les figures. La chambre de chauffage 12 loge un radiateur 14 et un radiateur additionnel 15, en particulier des résistances thermiques, destinés à réchauffer la deuxième fraction de flux d'air, préalablement à son évacuation hors de la chambre de chauffage 12 vers la chambre de mixage 10. Le flux d'air mixé est évacué de la chambre de mixage 10 par les sorties d'air 4. L'alimentation des sorties d'air 4 peut se faire de façon directement ou par l'intermédiaire d'un canal de distribution d'air 18 afin d'alimenter une zone particulière de l'habitacle du véhicule.

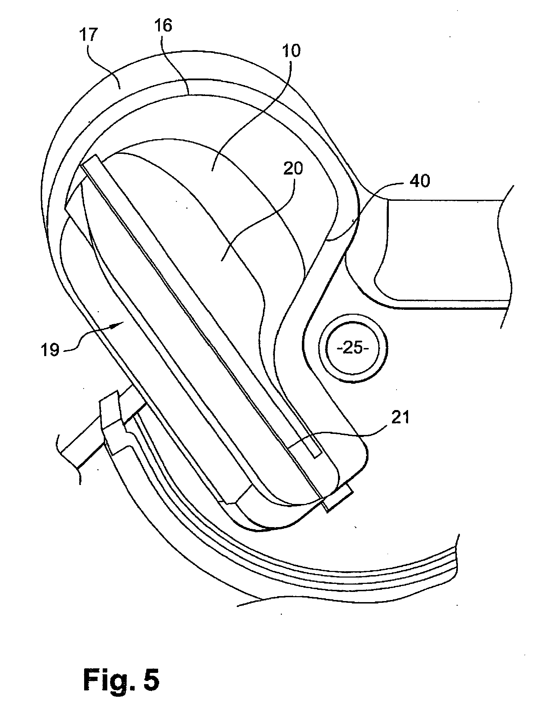

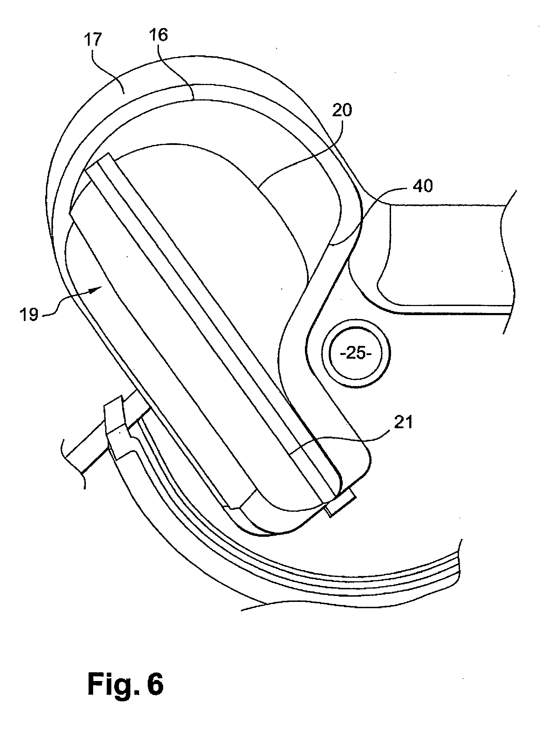

Les figures 2, 3, 5 et 6 présentent des vues représentant schématiquement en perspective un dispositif de génération d'un flux d'air mixé participant de l'installation et équipé du volet de distribution respectivement illustré en position d'ouverture et de fermeture. Toutefois, les figures 5 et 6 sont des vues agrandies de la présente invention détaillée respectivement aux figures 2 et 3.

Sur les figures 2 et 3, l'installation 1 est représentée schématiquement en perspective dans laquelle le canal de distribution 18 a été enlevé. Selon ces agencements, la chambre de mixage 10 est avantageusement équipée d'au moins une sortie d'air mixé 16 qui est ménagée à travers une enveloppe 17 délimitant la chambre de mixage 10 et constitutive du boîtier 2. Une telle localisation de la sortie d'air mixé 16 permet de limiter l'encombrement de l'installation 1 et confère à l'installation 1 une compacité améliorée. De plus, une telle localisation permet de mettre aisément en communication aéraulique la sortie d'air mixé 16 avec le canal de distribution d'air 18, visible sur la figure 1, en une zone de l'installation 1 facilement accessible. Il résulte de ces dispositions que le canal de distribution 18 est susceptible de présenter une conformation simple, de préférence majoritairement rectiligne, ce qui tend à diminuer les pertes de charge que subit le flux d'air mixé véhiculé par le canal de distribution 18 tout en assurant une compacité d'ensemble optimisée.

La sortie d'air mixé 16 est équipée d'un volet de distribution 19 qui est mobile en rotation sur lui-même entre une position d'ouverture, représentée sur les figures 2 et 5, dans laquelle il autorise une circulation d'air à travers la sortie d'air mixé 16 vers la canal de distribution 18 et une position de fermeture, représentée sur les figures 3 et 6, dans laquelle il interdit une circulation d'air à travers la sortie d'air mixé 16.

Le volet de distribution 19 est constitué d'une paroi 20. Il est mobile en rotation autour d'un élément d'articulation 21. L'élément d'articulation 21 du volet de distribution 19, par exemple un axe, est articulé sur l'enveloppe 17 délimitant la chambre de mixage 10. Selon une autre forme de réalisation, le volet de distribution 19 est articulé dans le canal de distribution 18 qui est en relation aéraulique avec une bouche d'évacuation 40 du flux d'air mixé ménagée à travers l'enveloppe 17.

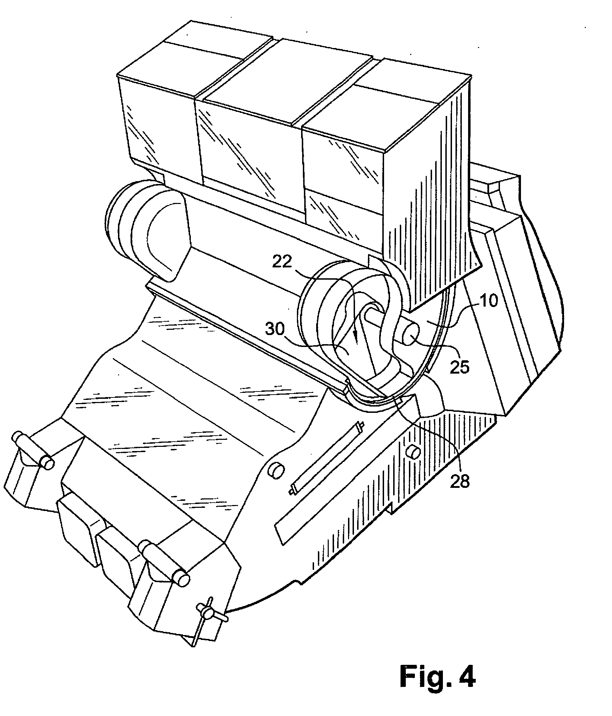

Sur la figure 4, l'installation 1 est représentée schématiquement en perspective l'installation telle détaillée sur les figures 2 et 3 dans laquelle le volet de distribution 19 a été enlevé. En figure 4, la chambre de mixage 10 loge un volet de mixage 22 mobile entre deux positions extrêmes. Dans une première position extrême, le volet de mixage 22 obture une bouche d'admission du flux d'air froid ménagée à travers l'enveloppe 17. Dans une deuxième position extrême, le volet de mixage 22 obture une bouche d'admission du flux d'air chaud ménagée à travers l'enveloppe 17. La bouche d'admission du flux d'air froid constitue un passage d'air pour la première fraction de flux d'air admise directement à l'intérieur d'une chambre de mixage 10 tandis que la bouche d'admission du flux d'air chaud constitue un passage d'air pour la deuxième fraction de flux d'air admise à l'intérieur d'une chambre de chauffage 12.

Le volet de mixage 22 est articulé sur le boîtier 2 par l'intermédiaire d'un axe de rotation 25. Le volet de mixage 22 comporte au moins un flasque 30 constituant une liaison entre l'axe de rotation 25 et une paroi d'obturation 28 du volet de mixage 22. La paroi d'obturation 28 est destinée à obturer au moins partiellement l'une des bouches d'admission du flux d'air froid et/ou du flux d'air chaud, de manière à générer un flux d'air mixé dont la température peut s'échelonner entre celle de la première fraction de flux d'air froid et celle de la deuxième fraction de flux d'air admise à l'intérieur d'une chambre de chauffage 12.

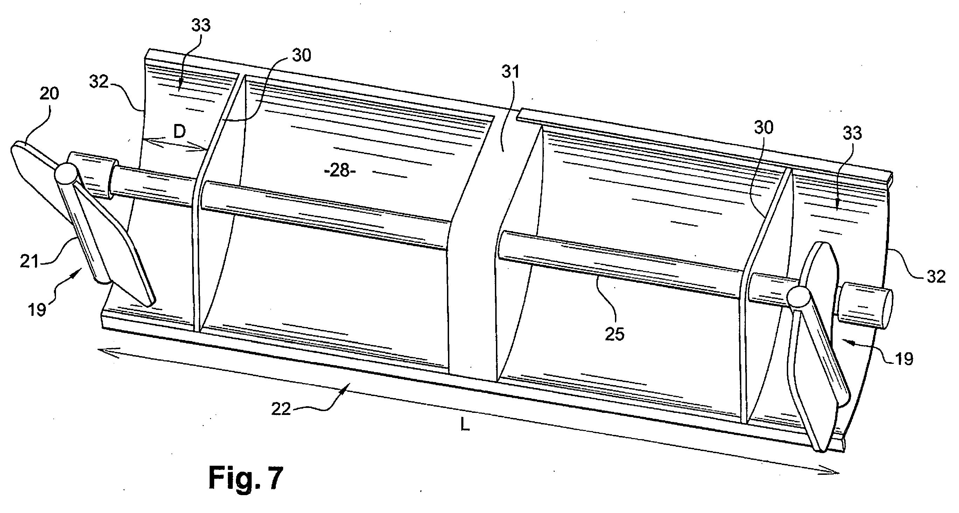

Sur les figures 7 à 10, le volet de mixage 22 comporte deux flasques latéraux 30 entre lesquels est interposé un flasque médian 31. Pour permettre la rotation sur eux-mêmes des volets de distribution 19 placés aux extrémités du volet de mixage 22, les flasques latéraux 30 sont disposés à une distance D d'un bord extrême 32 respectif du volet de mixage 22. Ce déport des flasques latéraux 30 vers l'intérieur du volet de mixage 22 permet de ménager un passage latéral 33 dans lequel chacun des volets de distribution 19 est apte à être mobile en rotation autour de l'élément d'articulation 21. Ainsi, les volets de distribution 19 sont déplacés dans le passage latéral 33 du volet de mixage 22.

Préférentiellement, la distance D entre le flasque 30 et le bord extrême 32 du volet de mixage 22 est comprise entre 10% et 30% d'une longueur L du volet de mixage.

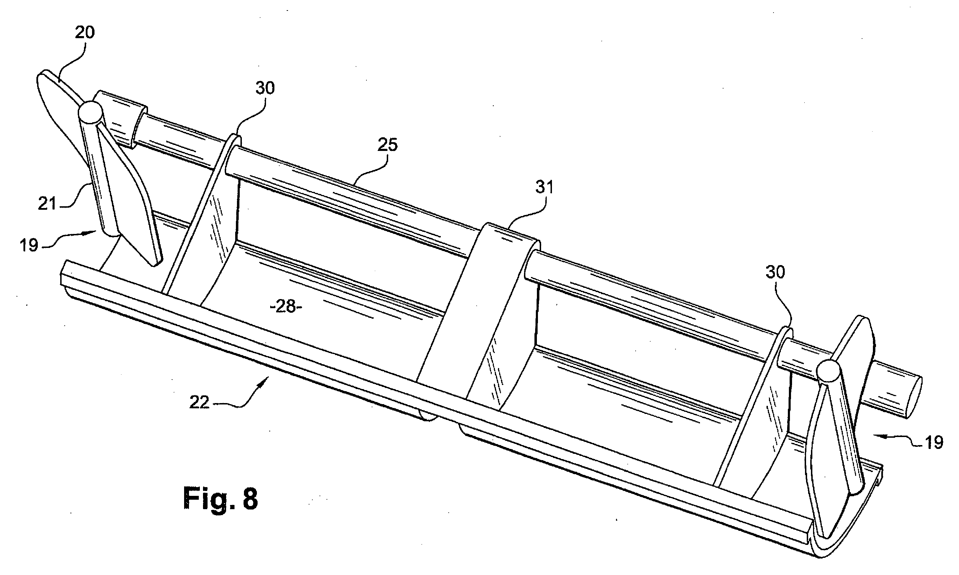

La figure 8 diffère de l'exemple décrit en figure 7 par la position du volet de mixage 22. En effet, en figure 8, le volet de mixage 22 a subi une rotation dans le sens horaire autour de l'axe 25 par rapport à la position qui était la sienne en figure 7. La position des volets de distribution 19 en figures 7 et 8 n'a pas été modifiée. Ainsi, selon la présente invention, la géométrie des volets de distribution 19 et la présence de passages latéraux 33 dans le volet de mixage 22 permet la mise ne mouvement du volet de mixage 22 sans venir interférer avec les volets de distribution 19.

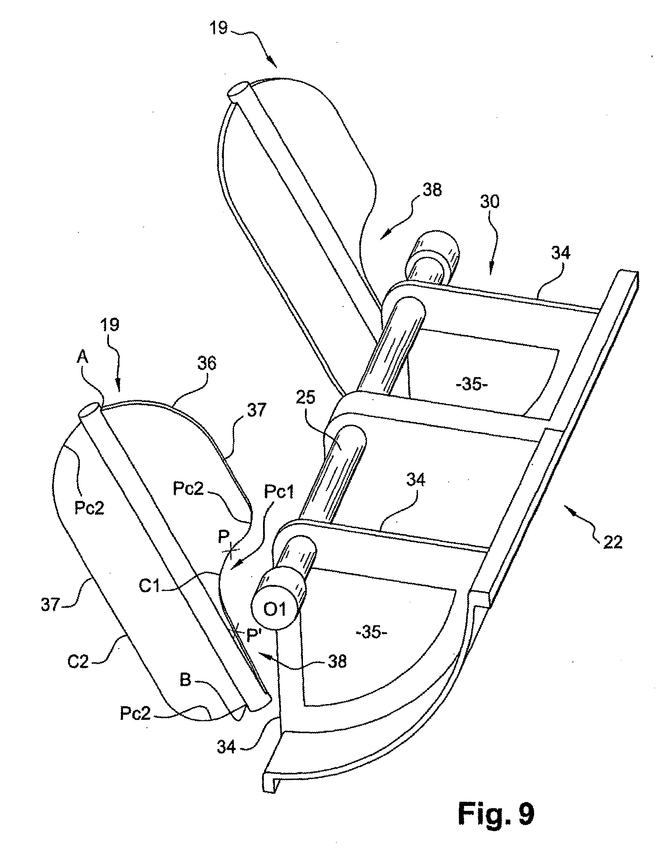

Sur la variante de réalisation illustrée sur la figure 9, les flasques latéraux 30 sont respectivement formés de deux bras de liaison 34 entre l'axe de rotation 25 et la paroi d'obturation 28. Ces bras de liaison 34 délimitent conjointement avec la paroi d'obturation 28 un évidement 35 pour le passage du flux d'air mixé.

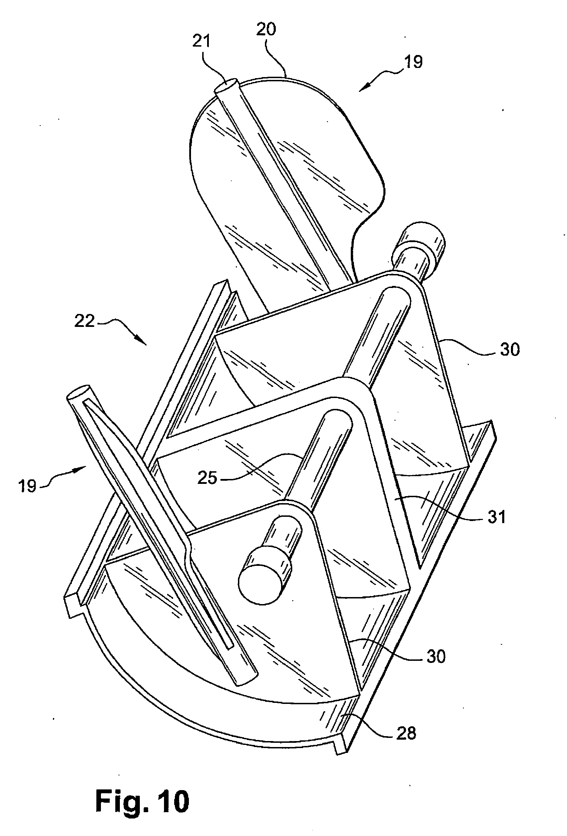

Les figures 9 et 10 montrent par ailleurs la possibilité de déplacer les volets de distribution 19 et le volet de mixage 22 autour de leurs axes de rotations respectifs 25 et AB sans que les volets de distribution 19 interfèrent avec le volet de mixage 22 et réciproquement.

En figure 9, les volets de distribution 19 sont, pour un premier, en position fermée et, pour un second, en position ouverte. En figure 10, le premier volet de distribution à pivoter autour de son axe de rotation AB afin de venir en position ouverte alors que le second volet de distribution à pivoter autour de son axe de rotation AB afin de venir en position fermée. Le volet de mixage 22 a pivoté dans le sens horaire autour de son axe de rotation 25 entre les dispositions décrites respectivement aux figures 9 et 10.

Sur l'ensemble des déplacements, les volets de distribution 19 et le volet de mixage 22, bien que se trouvant dans des espaces communs, ne sont pas en contact l'un avec l'autre et ainsi n'interagissent pas les uns avec les autres.

De façon préférentielle, la paroi 20 du volet de distribution 19 est préférentiellement plane et comporte un dégagement 38 permettant le passage de l'axe de rotation 25 du volet de mixage 22.

Selon un exemple particulier de réalisation des volets de distribution tels que décrit en figure 9, la paroi 20 du volet de distribution 19 est préférentiellement plane et est délimitée par un pourtour périphérique 36 qui comporte deux points d'inflexion P et P'. Ces deux points d'inflexion P et P' délimitent le dégagement 38.

Plus particulièrement, les deux points d'inflexion P et P' délimitent le dégagement 38 par une première courbe C1 qui comprend au moins une portion de courbe PC1 dont le centre de courbure O1 est situé à l'extérieur du pourtour périphérique 36.

Le pourtour périphérique 36 est constitué par la première courbe C1 et une deuxième courbe C2 qui comprend trois portions de courbe PC2 qui sont chacune formées d'un arc de cercle respectif. Deux portions de courbe PC2 successives sont reliées entre elles par une portion de droite 37. La longueur de la courbe C2 est de préférence supérieure au double de la longueur de la courbe C1. On notera par ailleurs que l'élément d'articulation 21 du volet de distribution 19 comporte deux points communs A, B avec la deuxième courbe C2.

Ces dispositions sont telles que la première courbe C1 délimite un dégagement 38 débouchant au pourtour périphérique 36, ce dégagement 38 étant ménagé à travers le volet de distribution 19 pour autoriser une mobilité en rotation du volet de distribution 19 malgré la présence à proximité du volet de distribution 19 d'un élément structurel de l'installation 1, tel que l'axe de rotation 25 du volet de mixage 22. Ce dégagement 38 permet avantageusement de combiner les fonctions de mixage de flux d'air froid et chaud du volet de mixage 22 et de distribution d'un flux d'air mixé par le volet de distribution 19 à l'intérieur d'un espace le plus limité possible.

L'objet de la présente invention telle que décrit en relation avec les différents exemples détaillés précédemment est de réaliser un dispositif de distribution d'un flux d'air mixé comportant une chambre de mixage logeant un volet de mixage et au moins un volet de distribution agencés de façon compacte, simple et satisfaisante au regard du fonctionnement et du rendement de l'installation.

La présente invention trouve une application particulière dans les installations de chauffage, ventilation et/ou climatisation et en particulier dans le domaine des équipements des véhicules automobiles.

Bien évidemment, l'invention n'est pas limitée aux modes de réalisation décrits précédemment et fournis uniquement à titre d'exemple et englobe d'autres variantes que pourra envisager l'homme du métier dans le cadre des revendications et notamment toutes combinaisons des différents modes de réalisation décrits précédemment.

## Revendications

1. Dispositif de distribution d'un flux d'air mixé comportant une chambre de mixage (10) logeant un volet de mixage (22) et comprenant au moins un volet de distribution (19) mobile en rotation autour d'un élément d'articulation (21) entre une position d'ouverture dans laquelle il autorise une circulation d'air à travers une sortie d'air et une position de fermeture dans laquelle il interdit une telle circulation, **caractérisé en ce que** le volet de mixage (22) comporte un passage latéral (33) permettant la rotation du volet de distribution (19).

2. Dispositif de génération d'un flux d'air mixé selon la revendication 1, **caractérisé en ce que** le volet de mixage (22) comporte une paroi d'obturation (28), un axe de rotation (25) et au moins un flasque (30, 31) formant une liaison entre la paroi d'obturation (28) et l'axe de rotation (25) du volet de mixage (22).

3. Dispositif de génération d'un flux d'air mixé selon la revendication 2, **caractérisé en ce que** le flasque (30, 31) est disposé à une distance D d'un bord extrême (32) du volet de mixage (22) ménageant le passage latéral (33) entre le bord extrême (32) et le flasque (30,31) du volet de mixage (22).

4. Dispositif de génération d'un flux d'air mixé selon la revendication 2 ou 3, **caractérisé en ce que** l'élément d'articulation (21) du volet de distribution (19) est orthogonal à l'axe de rotation (25) du volet de mixage (22).

5. Dispositif de génération d'un flux d'air mixé selon l'une quelconque des revendications précédentes, **caractérisé en ce que** l'élément d'articulation (21) du volet de distribution (19) est articulé sur une enveloppe (17) délimitant la chambre de mixage (17).

6. Dispositif de génération d'un flux d'air mixé selon l'une quelconque des revendications précédentes, **caractérisé en ce que** l'élément d'articulation (21) du volet de distribution (19) est articulé sur un canal de distribution (18) du flux d'air mixé.

7. Dispositif de génération d'un flux d'air mixé selon la revendication, **caractérisé en ce que** le canal de distribution (18) du flux d'air mixé est en rotation aéraulique avec une bouche d'évacuation (40) du flux d'air mixé ménagée à travers l'enveloppe (17).

8. Dispositif de génération d'un flux d'air mixé selon l'une quelconque des revendications 2 à 7, **caractérisé en ce que** le flasque (30,31) comporte au moins deux bras de liaison (34) entre l'axe de rotation (25) et la paroi d'obturation (28).

9. Dispositif de génération d'un flux d'air mixé selon la revendication 8, **caractérisé en ce que** les bras de liaison (34) du flasque (30, 31) délimitent conjointement avec la paroi d'obturation (28) un évidement (35) pour un passage du flux d'air mixé.

10. Dispositif de génération d'un flux d'air mixé selon l'une des revendications 2 à 9, **caractérisé en ce que** le volet de distribution (19) d'un flux d'air comporte une paroi (20) comprenant un dégagement (38) apte à constituer un passage pour l'axe de rotation (25) du volet de mixage (22),

11. Dispositif de génération d'un flux d'air mixé selon la revendication 10, **caractérisé en ce que** la paroi (20) est délimitée par un pourtour périphérique (36) comportant deux points d'inflexion (P, P') délimitant le dégagement (38).

12. Installation de chauffage, de ventilation et/ou de climatisation logeant un dispositif de génération d'un flux d'air mixé selon l'une quelconque des revendications précédentes.

## Claims

1. Device for distributing a mixed airflow comprising a mixing chamber (10) housing a mixing flap (22) and comprising at least one distribution flap (19) movable in rotation about an articulation element (21) between an open position in which it allows air to circulate through an air outlet and a closed position in which it prevents such circulation, **characterized in that** the mixing flap (22) comprises a lateral passage (33) allowing the distribution flap (19) to rotate.

2. Device for generating a mixed airflow according to Claim 1, **characterized in that** the mixing flap (22) comprises a shut-off wall (28), a rotation axle (25) and at least one flange (30, 31) forming a connection between the shut-off wall (28) and the rotation axle (25) of the mixing flap (22).

3. Device for generating a mixed airflow according to Claim 2, **characterized in that** the flange (30, 31) is positioned a distance D away from an end edge (32) of the mixing flap (22) creating the lateral passage (33) between the end edge (32) and the flange (30, 31) of the mixing flap (22).

4. Device for generating a mixed airflow according to Claim 2 or 3, **characterized in that** the articulation element (21) of the distribution flap (19) is orthogonal to the rotation axle (25) of the mixing flap (22).

5. Device for generating a mixed airflow according to any one of the preceding claims, **characterized in that** the articulation element (21) of the distribution flap (19) is articulated to a casing (17) delimiting the mixing chamber (17).

6. Device for generating a mixed airflow according to any one of the preceding claims, **characterized in that** the articulation element (21) of the distribution flap (19) is articulated to a distribution duct (18) for distributing the mixed airflow.

7. Device for generating a mixed airflow according to Claim, **characterized in that** the distribution duct (18) for distributing the mixed airflow is in aeraulic communication with an outlet (40) for discharging the mixed airflow, which outlet is formed through the casing (17).

8. Device for generating a mixed airflow according to any one of Claims 2 to 7, **characterized in that** the flange (30, 31) comprises at least two connecting arms (34) between the rotation axle (25) and the shut-off wall (28).

9. Device for generating a mixed airflow according to Claim 8, **characterized in that** the connecting arms (34) of the flange (30, 31) delimit together with the shut-off wall (28) a recess (35) for the passage of the mixed airflow.

10. Device for generating a mixed airflow according to one of Claims 2 to 9, **characterized in that** the distribution flap (19) for distributing an airflow comprises a wall (20) that has a cut-out (38) able to form a passage for the rotation axle (25) of the mixing flap (22).

11. Device for generating a mixed airflow according to Claim 10, **characterized in that** the wall (20) is delimited by a peripheral perimeter (36) comprising two points of inflexion (P, P') delimiting the cut-out (38).

12. Heating, ventilating and/or air conditioning system housing a device for generating a mixed airflow according to any one of the preceding claims.

## Patentansprüche

1. Vorrichtung zur Verteilung eines Mischluftstroms, die eine Mischkammer (10) aufweist, in der sich eine Mischklappe (22) befindet, und mindestens eine Verteilerklappe (19) enthält, welche um ein Gelenkbauteil (21) zwischen einer Öffnungsstellung, in der sie eine Luftzirkulation durch einen Luftauslass erlaubt, und einer Schließstellung drehbeweglich ist, in der sie eine solche Zirkulation verhindert, **dadurch gekennzeichnet, dass** die Mischklappe (22) einen seitlichen Durchlass (33) aufweist, der die Drehung der Verteilerklappe (19) erlaubt.

2. Vorrichtung zur Erzeugung eines Mischluftstroms nach Anspruch 1, **dadurch gekennzeichnet, dass** die Mischklappe (22) eine Verschlusswand (28), eine Drehachse (25) und mindestens einen Flansch (30, 31) aufweist, der eine Verbindung zwischen der Verschlusswand (28) und der Drehachse (25) der Mischklappe (22) bildet.

3. Vorrichtung zur Erzeugung eines Mischluftstroms nach Anspruch 2, **dadurch gekennzeichnet, dass** der Flansch (30, 31) in einem Abstand D von einem Endrand (32) der Mischklappe (22) angeordnet ist, der den seitlichen Durchlass (33) zwischen dem Endrand (32) und dem Flansch (30, 31) der Mischklappe (22) ausspart.

4. Vorrichtung zur Erzeugung eines Mischluftstroms nach Anspruch 2 oder 3, **dadurch gekennzeichnet, dass** das Gelenkbauteil (21) der Verteilerklappe (19) orthogonal zur Drehachse (25) der Mischklappe (22) ist.

5. Vorrichtung zur Erzeugung eines Mischluftstroms nach einem der vorhergehenden Ansprüche, **dadurch gekennzeichnet, dass** das Gelenkbauteil (21) der Verteilerklappe (19) an eine Hülle (17) angelenkt ist, die die Mischkammer (17) begrenzt.

6. Vorrichtung zur Erzeugung eines Mischluftstroms nach einem der vorhergehenden Ansprüche, **dadurch gekennzeichnet, dass** das Gelenkbauteil (21) der Verteilerklappe (19) an einen Verteilerkanal (18) des Mischluftstroms angelenkt ist.

7. Vorrichtung zur Erzeugung eines Mischluftstroms nach Anspruch, **dadurch gekennzeichnet, dass** der Verteilerkanal (18) des Mischluftstroms in Luftverbindung mit einer Abfuhrmündung (40) des Mischluftstroms verbunden ist, die durch die Hülle (17) hindurch ausgespart ist.

8. Vorrichtung zur Erzeugung eines Mischluftstroms nach einem der Ansprüche 2 bis 7, **dadurch gekennzeichnet, dass** der Flansch (30, 31) mindestens zwei Verbindungsarme (34) zwischen der Drehachse (25) und der Verschlusswand (28) aufweist.

9. Vorrichtung zur Erzeugung eines Mischluftstroms nach Anspruch 8, **dadurch gekennzeichnet, dass** die Verbindungsarme (34) des Flanschs (30, 31) zusammen mit der Verschlusswand (28) eine Aushöhlung (35) für den Durchlass des Mischluftstroms begrenzen.

10. Vorrichtung zur Erzeugung eines Mischluftstroms nach einem der Ansprüche 2 bis 9, **dadurch gekennzeichnet, dass** die Verteilerklappe (19) eines Luftstroms eine Wand (20) aufweist, die eine Aussparung (38) enthält, welche einen Durchlass für die Drehachse (25) der Mischklappe (22) bilden kann.

11. Vorrichtung zur Erzeugung eines Mischluftstroms nach Anspruch 10, **dadurch gekennzeichnet, dass** die Wand (20) von einer Umfangsaußenlinie (36) begrenzt wird, die zwei Knickpunkte (P, P') aufweist, die die Aussparung (38) begrenzen.

12. Heiz-, Lüftungs- und/oder Klimaanlage, die eine Vorrichtung zur Erzeugung eines Mischluftstroms nach einem der vorhergehenden Ansprüche enthält.
